# FASCICULE DE BREVET EUROPEEN

(11) **EP 2 877 354 B1**
(45) Date de publication et mention de la délivrance du brevet: **02.05.2018**
(21) Numéro de dépôt: 13740313.5
(22) Date de dépôt: 26.07.2013
(51) Int. Cl.: B60H 1/00

(54) **PROCEDE DE REGULATION D'UNE CLIMATISATION DE VEHICULE**
VERFAHREN ZUR STEUERUNG DER KLIMAANLAGE EINES KRAFTFAHRZEUGS
METHOD FOR CONTROLLING VEHICLE AIR-CONDITIONING

(30) Priorité: 26.07.2012 FR 1257255
(43) Date de publication de la demande: 03.06.2015
(73) Titulaire: BACQUEYRISSES - SOCIETE AUTOMOBILES, 33522 Bruges Cedex (FR)
(72) Inventeur: BACQUEYRISSES, Jean, F-33110 Le Bouscat (FR); NIEDDU, Giovanni, F-33700 Merignac (FR)
(74) Mandataire: Ipside
(86) Numéro de dépôt international: PCT/EP2013/065809
(87) Numéro de publication internationale: WO 2014/016412

(56) Documents cités:
- EP-A2- 1 726 464
- WO-A2-98/21059
- US-A1- 2006 000 429
- US-A1- 2010 191 416

## Description

La présente invention traite d'un procédé de régulation d'une climatisation de véhicule.

Elle s'applique à des véhicules comportant un condenseur disposé le long d'un radiateur moteur d'un véhicule.

Elle s'applique en particulier de la climatisation des véhicules de transport de personnes à refroidissement moteur latéral arrière tels que les bus ou autocars de tourisme.

Traditionnellement, les climatisations de véhicules de transport en commun comportent un ou des condenseurs logés soit au niveau de soutes soit sur le toit de l'autocar ou du bus. Les condenseurs sont refroidis par des ventilateurs électriques dont la consommation est loin d'être négligeable.

Par ailleurs, le compresseur de la climatisation est dans le compartiment moteur arrière accouplé par une courroie au moteur du véhicule. De ce fait, des cheminements longs et complexes de tubulures de transport du fluide frigorifique sont nécessaires entre le compresseur et le condenseur et entre le condenseur et le ou les évaporateurs situés dans l'habitacle du véhicule.

Ces longueurs de tubulures accroissent le poids de la climatisation, causent une perte de charge et des pertes thermiques et imposent de remplir le circuit avec plus de gaz.

La présente invention vise à simplifier l'implantation des condenseurs de véhicules de transport en commun tels que bus et autocars comportant un compartiment moteur arrière et un refroidissement moteur latéral arrière d'un côté du compartiment moteur et vise à réduire la longueur des tubulures de cette climatisation.

Le refroidissement moteur des véhicules à refroidissement moteur latéral arrière comporte un radiateur dans lequel circule de l'eau de refroidissement du moteur et un ventilateur dont le régime de rotation est généralement commandé en fonction de la température moteur.

Le radiateur est disposé dans une ouverture faite dans la carrosserie du véhicule sur un côté du véhicule en partie arrière du véhicule. Cette ouverture est masquée par une grille ou une porte munie de lamelles inclinées cachant le radiateur et laissant passer l'air.

Le ventilateur de type aspirant l'air au travers du radiateur est placé face au radiateur dans le compartiment moteur du côté opposé à l'ouverture.

Dans le cas d'un moteur turbocompressé à échangeur, l'échangeur est disposé devant le radiateur côté opposé au ventilateur.

Selon la présente invention le condenseur de climatisation est disposé le long du radiateur côté ouverture dans la carrosserie de sorte que l'air aspiré par le ventilateur et traversant le radiateur traverse d'abord le condenseur.

Dans le cas d'un moteur avec turbocompresseur à échangeur, le condenseur se trouve en amont de l'échangeur et de ce fait en regardant l'ouverture latérale faite dans la carrosserie du véhicule on trouve le condenseur puis l'échangeur puis le radiateur et enfin, à l'intérieur du compartiment moteur, le ventilateur.

La disposition d'un condenseur devant un radiateur est connue dans les véhicules particuliers a radiateur frontal. Dans le cas des véhicules de transport en commun à refroidissement latéral, l'homme du métier a toutefois toujours considéré que la position latérale arrière du radiateur était une position défavorable et que le refroidissement moteur ne devait pas être perturbé par un dispositif annexe tel que la climatisation.

Dans cette optique de ne pas perturber un refroidissement moteur et pour garantir un fonctionnement correct d'une climatisation comportant un condenseur mis en parallèle avec un radiateur d'un véhicule, la présente invention prévoit dans des moyens adaptés à modifier le pilotage du ventilateur pour accroître sa vitesse de rotation lorsqu'un refroidissement du condenseur est nécessaire, ce dans le but de faire baisser la pression condenseur.

Le document WO 98/21059 divulgue un procédé de pilotage d'un ventilateur à commande hydraulique d'un véhicule comportant un système de climatisation pour lequel le condenseur du système de climatisation est disposé le long du radiateur du moteur du véhicule, la vitesse du ventilateur étant contrôlée par une vanne de dérivation.

Dans ce cadre, l'invention concerne un procédé de pilotage d'un ventilateur à commande hydraulique d'un véhicule comportant un système de climatisation dont le condenseur du système de climatisation est disposé le long du radiateur du moteur du véhicule, et pour lequel le ventilateur étant pourvu d'une vanne de réglage de débit à commande à modulation de largeur d'impulsion (ci après PWM) pour piloter la vitesse dudit ventilateur, ledit procédé comprenant au moins une étape de modification de la commande de pilotage du ventilateur de refroidissement du radiateur pour modifier sa vitesse de rotation en fonction d'une pression condenseur en sorte de réguler cette dernière en jouant sur ladite vitesse de rotation du ventilateur.

Ladite étape de modification est de manière préférentielle une étape commandant un accroissement de la vitesse de rotation du ventilateur lorsqu'un refroidissement du condenseur est souhaité.

Dans le cas d'une montée de la pression condenseur alors que le ventilateur est à vitesse maximum, le procédé comporte avantageusement au moins une étape de coupure de la climatisation

Pour une climatisation à circuit à évaporateurs multiples, dans le cas d'une montée de la pression condenseur alors que le ventilateur est à vitesse maximum, le procédé comporte préférablement au moins une étape de mise hors fonction d'une partie des évaporateurs afin de réduire la puissance demandée à la climatisation et ainsi refroidir le condenseur.

Avantageusement le procédé est mis en oeuvre dans un boîtier de commande.

Le boîtier de commande peut notamment être un calculateur moteur du véhicule ou un calculateur de climatisation du véhicule.

Selon un premier mode de réalisation, ladite étape de modification comprend avantageusement une modification du signal PWM moteur selon un rapport cyclique plus ou moins important en fonction d'une pression condenseur pour réguler cette dernière en jouant sur la vitesse de rotation du ventilateur.

Ladite étape de modification peut notamment comprendre une coupure du signal PWM moteur selon un rapport cyclique plus ou moins important en fonction de la pression condenseur.

Le procédé de l'invention s'applique en particulier à un véhicule à moteur arrière pourvu d'un radiateur disposé dans une ouverture faite à l'arrière de la carrosserie du véhicule et notamment à un véhicule de transport en commun.

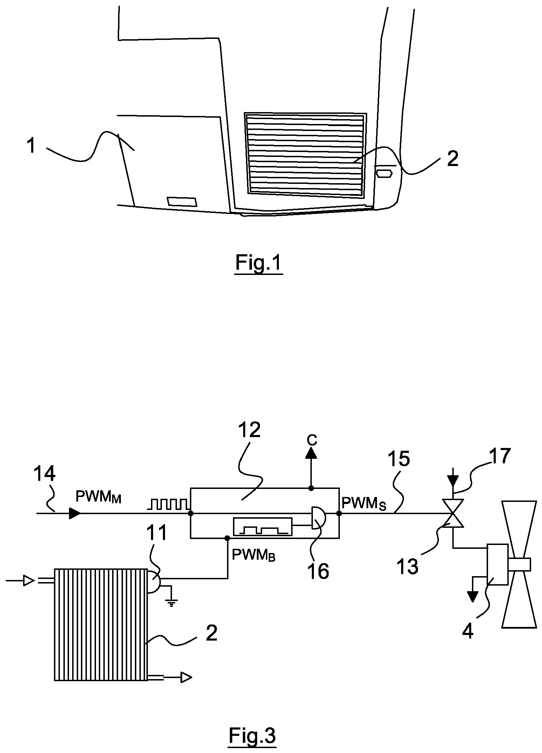

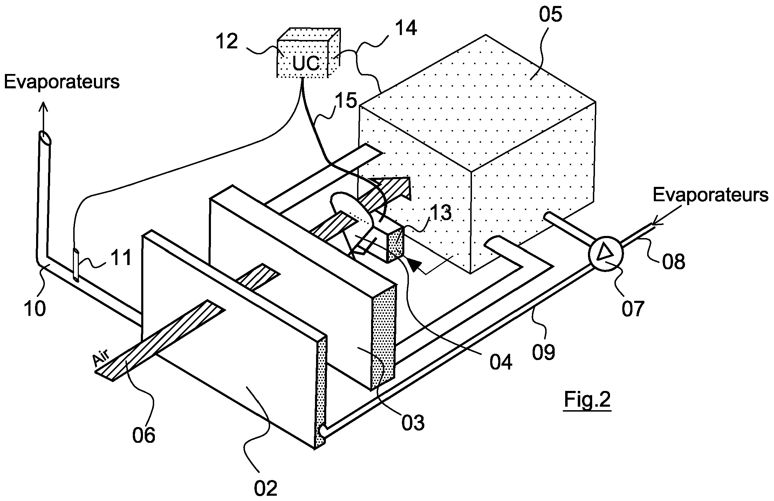

D'autres caractéristiques et avantages de l'invention seront apparents à la lecture qui suit d'un exemple de réalisation non limitatif de l'invention en référence aux dessins qui représentent:
en figure 1: une vue d'un condenseur disposé selon l'invention;
en figure 2: un schéma représentant le positionnement du condenseur de l'invention par rapport au radiateur et au moteur du véhicule;
en figure 3: un schéma électrique d'un dispositif de commande de ventilateur selon un aspect particulier de l'invention.

Les véhicules de transport en commun tels les autocars ont le moteur situé dans un compartiment arrière et comportent un radiateur qui se situe au niveau de ce compartiment, généralement dans un ouverture faite à l'arrière de la carrosserie du véhicule et en particulier un compartiment latéral arrière ou dans certains cas au dessus du compartiment moteur en face arrière de la carrosserie.

Le moteur est géré par un calculateur qui régule notamment le fonctionnement d'un ventilateur de refroidissement du radiateur moteur.

Sur un moteur d'autocar, la régulation de température d'eau par le ventilateur se fait communément dans une plage de température d'eau proche de 90°C et par exemple de l'ordre de 84 à 86°C.

Avantageusement, les moyens adaptés à modifier le pilotage du ventilateur sont des moyens adaptés à réaliser un accroissement de vitesse ventilateur par rapport à la consigne de vitesse donnée par le dispositif de pilotage du ventilateur.

De ce fait, la ventilation du radiateur moteur est toujours supérieure ou égale à la consigne demandée par le motoriste en fonction de la température moteur ce qui évite de perturber le refroidissement du moteur du véhicule.

Dans le cas des ventilateurs à commande hydraulique et vanne de réglage de débit à modulation de puissance par un signal à modulation de largeur d'impulsion (dit PWM), l'ouverture de la vanne est proportionnelle non pas au temps de présence d'une alimentation non nulle mais au temps de présence d'une alimentation nulle de la vanne. Un tel fonctionnement s'explique par une volonté de garantir le refroidissement moteur en mode dégradé c'est à dire en cas d'absence de signal PWM, cas de panne le plus probable.

De ce fait en cas de défaillance de l'alimentation PWM, la vanne se met en position ouverte correspondant à la vitesse maximale du ventilateur ce qui favorise le refroidissement moteur en mode dégradé.

La présente invention propose de jouer sur la vitesse de rotation du ventilateur dans le sens d'un accroissement de la vitesse ventilateur en réponse à un accroissement de la pression condenseur en modifiant la commande du ventilateur moteur.

Un boîtier de commande qui peut être un calculateur moteur ou un calculateur de climatisation vient par exemple ajouter une composante PWM, basse fréquence PWM_{B} par exemple environ de une à plusieurs dizaines de Hz sur le signal PWM, de régulation de la vanne de commande ventilateur PWM_{M} dont la fréquence porteuse est de l'ordre de une à plusieurs centaines de Hz par exemple. Il est dans ce cadre possible de réaliser un ET logique entre le signal PWM_{M} moteur et un signal PWM_{B}, lent représentatif de la consigne pression condenseur ou de travailler directement sur le signal PWM moteur pour accélérer le ventilateur.

La figure 1 correspond à un exemple de réalisation pour lequel un radiateur est disposé dans une ouverture faite dans la carrosserie d'un véhicule de transport en commun sur un côté du véhicule en partie arrière du véhicule. Dans le cadre de l'invention, un condenseur de climatisation 2 est disposé le long du radiateur côté ouverture dans la carrosserie.

Dans le cas d'un moteur comportant un turbocompresseur à échangeur, le condenseur se trouve en amont de l'échangeur de sorte qu'en regardant l'ouverture latérale faite dans la carrosserie du véhicule on trouve le condenseur puis l'échangeur puis le radiateur et enfin, à l'intérieur du compartiment moteur, le ventilateur.

La figure 2 représente plus précisément l'implantation des divers éléments à savoir un condenseur 2 selon l'invention en amont du radiateur 3 du moteur 5 et, à l'intérieur du compartiment moteur, le ventilateur 4 qui aspire de l'air 6 au travers du condenseur 2 et du radiateur 3.

Le ventilateur est du type ventilateur à commande hydraulique et vanne de réglage de débit 13 à commande PWM, pilotée de manière connue par un calculateur du véhicule non représenté.

Toujours en figure 2 sont représentés, le compresseur 7 recevant une tubulure 8 de retour de gaz venant du ou des évaporateurs situés dans l'habitacle du véhicule, une tubulure 9 reliant le compresseur 7 et le condenseur 2 et une tubulure 10 partant du condenseur pour aller vers le ou les évaporateurs.

Un capteur de pression 11, disposé en sortie du condenseur pour mesurer la pression condenseur, est relié à un boîtier de commande 12 qui eut notamment être intégré à un calculateur de climatisation ou au calculateur moteur. Le système représenté comporte ainsi plus généralement des moyens adaptés à modifier le pilotage du ventilateur 4 de refroidissement du radiateur 3 pour accroître sa vitesse de rotation lorsqu'un refroidissement du condenseur est nécessaire.

Ces moyens sont constitués ici par le boîtier de commande 12 de type calculateur de climatisation qui est intercalé dans le circuit de commande de l'électrovanne 13 et reçoit le signal PWM_{M} de commande de l'électrovanne par une liaison 14, une sortie 15 du boîtier 12 étant reliée à l'électrovanne 13 de commande du ventilateur 4.

Les moyens adaptés à modifier le pilotage du ventilateur dans le calculateur 12 sont des moyens adaptés à réaliser un accroissement de vitesse ventilateur PWMₛ par rapport à la consigne de vitesse PWM_{M} donnée par un dispositif de pilotage du ventilateur.

Le calculateur 12 ou boîtier de commande est adapté à couper le signal PWM_{M} moteur selon un rapport cyclique plus ou moins important en fonction de la pression condenseur mesurée par le capteur de pression 11 pour réguler cette dernière en jouant sur la vitesse de rotation du ventilateur.

Selon la figure 3, le boîtier de commande ou calculateur 12 est adapté à ajouter une composante PWM, basse fréquence PWM_{B} sur le signal PWM_{M} de régulation de la vanne de commande ventilateur issu du calculateur moteur.

La composante basse fréquence est d'environ 15 Hz, par exemple de 10 à 20 Hz pour une PWM moteur dont la fréquence porteuse est de l'ordre de 200Hz.

Plus généralement, la composante PWM, basse fréquence reste dans la plage de une à plusieurs dizaines de Hz, le signal PWM moteur, de régulation de la vanne de commande ventilateur ayant une fréquence porteuse de l'ordre de une à plusieurs centaines de Hz.

Le boîtier 12 réalise un ET logique 16 entre le signal PWM_{M} moteur et le signal PWM_{B} lent représentatif de la consigne pression condenseur.

Le boîtier 12 constitue ainsi des moyens adaptés à modifier le pilotage du ventilateur de refroidissement du radiateur pour accroître sa vitesse de rotation lorsqu'un refroidissement du condenseur est nécessaire.

Le calculateur réalise alors un accroissement de vitesse ventilateur par rapport à la consigne de vitesse donnée par le dispositif de pilotage du ventilateur du véhicule.

Cette fonction peut notamment être intégrée directement en tant que logiciel dans le calculateur moteur du véhicule qui va alors directement fournir un signal PWMₛ adapté à la consigne de vitesse augmentée du ventilateur.

On notera que selon le dispositif de régulation de l'invention, la régulation de la pression du condenseur ne s'oppose pas à la régulation de la température moteur du fait que les besoins en climatisation sont réduits par basse température et accrus par haute température. Les besoins en refroidissement moteur ayant la même tendance, les deux régulations ne s'opposent pas.

Par exemple, dans le cas d'un condenseur que l'on cherche à limiter à 20 bar, la régulation pression condenseur est réglée pour se mettre en fonction à 12,5 bar puis la consigne augmente jusqu'à atteindre son maximal à 20 bar. Le signal PWM_{B} suit la consigne.

Avant la mise en fonction de la régulation pression, la vitesse ventilateur est uniquement régulée par la consigne moteur PWM_{M}. A 20 bar le ventilateur est en vitesse maximale, la consigne moteur n'a plus d'effet. Entre 12,5 bar et 20 bar, la vitesse moteur est égale à la vitesse de ventilateur correspondant à la consigne moteur augmentée de la consigne pression.

Au niveau de la régulation pression, le dispositif de commande représenté est un calculateur de régulation climatisation qui reçoit une information pression au niveau d'une sonde de pression. Le calculateur 12 comprend un élément de commande tel qu'un interrupteur, relais, interrupteur analogique ou transistor sur la ligne de commande entre le calculateur moteur et la vanne de régulation de vitesse du ventilateur pour générer le signal de commande de régulation de pression superposé au signal de commande ventilation moteur.

Le calculateur 12 de régulation climatisation comprend les moyens de calcul de la largeur d'impulsion PWM_{B} de la régulation pression et en outre comprend des lois de commandes particulières par exemple une loi de commande forçant une grande vitesse dans le cas d'une augmentation de pression rapide telle que supérieure à 4 bars pendant 2 secondes.

Le calculateur de régulation climatisation comporte une commande de mise en marche / arrêt de la climatisation C et est en outre avantageusement adapté à forcer une mise en route de la climatisation du véhicule par temps froid pour utiliser le condenseur comme moyen de réchauffer le radiateur moteur et ainsi réduire le temps de mise en chauffe du moteur. Ceci est complété par le fait que la climatisation constitue alors une charge moteur qui accélère son chauffage.

Par ailleurs, le calculateur de régulation peut, dans le cas par exemple où la pression condenseur monte alors que le ventilateur est déjà au maximum, être programmé pour couper la climatisation ou, pour un circuit à évaporateurs multiples, commander une mise hors fonction d'une partie des évaporateurs afin de réduire la puissance demandée à la climatisation et ainsi refroidir le condenseur qui ne réchauffera ainsi plus l'air aspiré au travers du radiateur moteur.

Selon les figures 2 et 3 le boîtier de commande de l'électrovanne en fonction de la pression condenseur et le boîtier de commande de la climatisation sont un boîtier unique mais ces boîtiers peuvent être des boîtiers séparés notamment dans le cas où la fonction de régulation est intégrée dans un calculateur moteur du véhicule.

Le système de l'invention permet un gain de poids notable, un condenseur équipé d'une ventilation électrique avec son châssis avoisinant les 60 kg alors que le condenseur seul muni de pattes de fixation a une masse de l'ordre de 7 à 10 kg.

Ce système permet un gain sur les tuyauteries fluide réfrigérant de 8 à 10 mètres et un gain sur le fluide permettant de passer d'une masse de fluide de environ 9 kg à une masse de fluide d'environ 5,5 kg.

L'invention ne se limite pas à l'exemple décrit et notamment, les valeurs données sont susceptibles de varier selon les plages de tolérance usuelles dans le domaine concerné de la climatisation de véhicules tout en restant dans le cadre de l'invention, telle que définie par les revendications.

## Revendications

1. Procédé de pilotage d'un ventilateur (4) à commande hydraulique d'un véhicule comportant un système de climatisation pour lequel le condenseur (2) du système de climatisation est disposé le long du radiateur (3) du moteur (5) du véhicule, **caractérisé en ce que** le ventilateur est pourvu d'une vanne de réglage de débit (13) à commande à modulation de largeur d'impulsion pour piloter la vitesse dudit ventilateur, ledit procédé comprenant au moins une étape de modification de la commande de pilotage du ventilateur (4) de refroidissement du radiateur (3) pour modifier sa vitesse de rotation en fonction d'une pression condenseur en sorte de réguler cette dernière en jouant sur ladite vitesse de rotation du ventilateur (4).

2. Procédé de pilotage d'un ventilateur à commande hydraulique selon la revendication 1 pour lequel ladite étape de modification est une étape commandant un accroissement de la vitesse de rotation du ventilateur (4) lorsqu'un refroidissement du condenseur (2) est souhaité.

3. Procédé de pilotage d'un ventilateur à commande hydraulique d'un véhicule selon la revendication 1 ou 2, pour lequel dans le cas d'une montée de la pression condenseur (2) alors que le ventilateur (4) est à vitesse maximum, le procédé comporte au moins une étape de coupure de la climatisation.

4. Procédé de pilotage d'un ventilateur à commande hydraulique d'un véhicule selon l'une quelconque des revendications 1 à 3 pour une climatisation à circuit à évaporateurs multiples, pour lequel dans le cas d'une montée de la pression condenseur (2) alors que le ventilateur (4) est à vitesse maximum, le procédé comporte au moins une étape de mise hors fonction d'une partie des évaporateurs afin de réduire la puissance demandée à la climatisation et ainsi refroidir le condenseur.

5. Procédé de pilotage d'un ventilateur à commande hydraulique d'un véhicule selon l'une quelconque des revendications précédentes pour lequel le procédé est mis en oeuvre dans un boîtier de commande (12).

6. Procédé selon la revendication 5 pour lequel le boîtier de commande (12) est un calculateur moteur du véhicule.

7. Procédé selon la revendication 5 pour lequel le boîtier de commande (12) est un calculateur de climatisation du véhicule.

8. Procédé de pilotage d'un ventilateur à commande hydraulique d'un véhicule selon l'une quelconque des revendications 1 à 7 pour lequel ladite étape de modification comprend une modification du signal à modulation de largeur d'impulsion moteur (PWM_{M}) selon un rapport cyclique plus ou moins important (PWM_{B}) en fonction d'une pression condenseur pour réguler cette dernière en jouant sur la vitesse de rotation du ventilateur (4).

9. Procédé de pilotage d'un ventilateur à commande hydraulique d'un véhicule selon la revendications 8 pour lequel ladite étape de modification comprend une coupure du signal à modulation de largeur d'impulsion moteur (PWM_{M}) selon un rapport cyclique plus ou moins important en fonction de la pression condenseur.

10. Procédé de pilotage d'un ventilateur à commande hydraulique d'un véhicule selon l'une quelconque des revendications précédentes **caractérisé en ce qu'**il est appliqué à un véhicule à moteur arrière pourvu d'un radiateur (3) disposé dans une ouverture faite à l'arrière (1) de la carrosserie du véhicule.

11. Procédé selon la revendication 10 pour lequel le véhicule est un véhicule de transport en commun.

## Patentansprüche

1. Verfahren zur Steuerung eines hydraulisch betriebenen Ventilators (4) eines Fahrzeugs, das mit einer Klimaanlage versehen ist, für die der Kondensator (2) der Klimaanlage entlang dem Kühler (3) des Motors (5) des Fahrzeugs angeordnet ist, **dadurch gekennzeichnet, dass** der Lüfter mit einem durch Pulsbreitenmodulation gesteuerten Durchflusssteuerventil (13) zum Steuern der Drehzahl des Lüfters versehen ist, wobei das Verfahren mindestens einen Schritt zum Modifizieren des Steuerbefehls des Kühlventilators (4) des Kühlers (3) umfasst, um seine Drehzahl entsprechend dem Druck des Kondensators zu ändern, der durch die Einwirkung auf die Rotationsgeschwindigkeit des Gebläses (4) reguliert wird.

2. Verfahren zum Steuern eines hydraulisch betriebenen Gebläses nach Anspruch 1, wobei der Schritt des Modifizierens ein Schritt ist, der eine Erhöhung der Drehgeschwindigkeit des Gebläses (4) antreibt, wenn eine Kühlung des Kondensors (2) erwünscht ist.

3. Verfahren zum Steuern eines hydraulisch betriebenen Gebläses eines Fahrzeugs nach Anspruch 1 oder 2, wobei in dem Fall eines Anstiegs des Kondensatordrucks (2), während das Gebläse (4) auf maximaler Geschwindigkeit läuft, das Verfahren mindestens einen Schritt der Unterbrechung der Klimaanlage umfasst.

4. Verfahren zur Steuerung eines hydraulisch betriebenen Gebläses eines Fahrzeugs nach einem der Ansprüche 1 bis 3 zur Klimatisierung mit Mehrfachverdampferkreislauf, bei dem im Falle eines Anstiegs des Kondensatordrucks (2) während der Ventilator (4) gleichzeitig bei maximaler Geschwindigkeit läuft, mindestens ein Schritt erforderlich ist, der das Deaktivierens eines Teils des Verdampfers umfasst, um die von der Klimaanlage benötigte Energie zu reduzieren und somit den Kondensator zu kühlen.

5. Verfahren zum Steuern eines hydraulisch betriebenen Gebläses eines Fahrzeugs nach einem der vorhergehenden Ansprüche, bei dem das Verfahren in einem Steuerkasten (12) implementiert wird.

6. Verfahren nach Anspruch 5, wobei die Steuereinheit (12) eine Motorsteuereinheit des Fahrzeugs ist.

7. Verfahren nach Anspruch 5, wobei die Steuereinheit (12) ein Fahrzeug-Klimatisierungsrechner ist.

8. Verfahren zum Steuern eines hydraulisch betriebenen Gebläses eines Fahrzeugs nach einem der Ansprüche 1 bis 7, wobei der Modifizierungsschritt eine Modifikation des pulsweitenmodulierten Signals (PWM_{M}) entsprechend einem größeren oder niedrigeren Arbeitszyklus (PWM_{B}) umfasst, der abhängig von einen Kondensatordruck ist, um diesen durch Einstellung der Drehzahl des Gebläses (4) zu regeln.

9. Verfahren zum Steuern eines hydraulisch betriebenen Gebläses eines Fahrzeugs nach Anspruch 8, wobei der Modifizierungsschritt das Ausschalten des pulsweitenmodulierten Signals (PWM_{M}) gemäß einem mehr oder weniger wichtigen Tastverhältnis in Abhängigkeit vom Kondensatordruck umfasst.

10. Verfahren zur Steuerung eines hydraulisch betriebenen Gebläses eines Fahrzeugs nach einem der vorhergehenden Ansprüche, was **dadurch gekennzeichnet ist, dass** es bei einem Fahrzeug mit einem Heckmotor angewendet wird, der mit einem Kühler (3) versehen ist, der in einer nach hinten gerichteten Öffnung (1) der Fahrzeugkarosserie angeordnet ist.

11. Verfahren nach Anspruch 10, wobei das Fahrzeug ein öffentliches Transportfahrzeug ist.

## Claims

1. A method of controlling a hydraulically operated fan (4) of a vehicle provided with an air conditioning system for which the condenser (2) of the air conditioning system is placed along the radiator (3) of the engine (5) of the vehicle, **characterized in that** the fan is provided with a pulse width modulation-controlled flow control valve (13) for controlling the speed of said fan, said method including at least one step of modifying the control command of cooling fan (4) of the radiator (3) to change its rotation speed according to the pressure of the condenser so as to regulate the latter by acting on said speed of rotation of the fan (4).

2. A method of controlling a hydraulically operated fan according to claim 1 wherein said step of modifying is a step driving an increase of the rotational speed of the fan (4) when a cooling of the condenser (2) is desired.

3. A method of controlling a hydraulically operated fan of a vehicle according to claim 1 or 2, wherein in the case of a rise of the condenser pressure (2) while the fan (4) is at maximum speed, the method includes at least one step of air conditioning cut off.

4. A method of controlling a hydraulically operated fan of a vehicle according to any one of claims 1 to 3 for air conditioning with multi-evaporator circuit, for which in the case of a rise of the condenser pressure (2) while the fan (4) is at maximum speed, the method includes at least a step of deactivating a portion of the evaporators in order to reduce the power needed from the air conditioning and thus cool down the condenser.

5. A method of controlling a hydraulically operated fan of a vehicle according to any one of the preceding claims for which the method is implemented in a control box (12).

6. A method according to claim 5 wherein the control unit (12) is a motor control unit of the vehicle.

7. A method according to claim 5 wherein the control unit (12) is a vehicle air conditioning calculator.

8. A method of controlling a hydraulically operated fan of a vehicle according to any one claims 1 to 7 wherein said modifying step includes a modification of the motor pulse width modulated (PWM_{M}) according to a greater or lower duty cycle (PWM_{B}), depending on a condenser pressure to regulate the latter by adjusting the speed of rotation of the fan (4).

9. A method of controlling a hydraulically operated fan of a vehicle according to claim 8 wherein said modifying step includes acut off of the pulse width modulated signal (PWM_{M}) according to a more or less important duty cycle depending on condenser pressure.

10. A method of controlling a hydraulically operated fan of a vehicle according to any one of the preceding claims **characterized in that** it is applied to a vehicle with a rear motor provided with a radiator (3) placed in an opening made to the rear (1) of the vehicle body.

11. The method according to claim 10 wherein the vehicle is a public transport vehicle.
